# EUROPEAN PATENT SPECIFICATION

(11) **EP 2 368 252 B1**
(45) Date of publication and mention of the grant of the patent: **16.01.2013**
(21) Application number: 09806118.7
(22) Date of filing: 24.11.2009
(51) Int. Cl.: G21B 3/00

(54) **METHOD FOR PRODUCING ENERGY AND APPARATUS THEREFOR**
VERFAHREN ZUR ENERGIEERZEUGUNG UND GERÄT DAFÜR
PROCÉDÉ DE PRODUCTION D ÉNERGIE ET SON APPAREIL

(30) Priority: 24.11.2008 IT PI20080119
(43) Date of publication of application: 28.09.2011
(73) Proprietor: Piantelli, Silvia, 53100 Siena (SI) (IT); Bergomi, Luigi, 25057 Sale Marasino (BS) (IT); Ghidini, Tiziano, 25065 Lumezzane, (BS) (IT)
(72) Inventor: PIANTELLI, Francesco, I-53100 Siena (SI) (IT)
(74) Representative: Celestino, Marco
(86) International application number: PCT/IB2009/007549
(87) International publication number: WO 2010/058288

(56) References cited:
- WO-A1-95/20816
- WO-A1-96/35215
- WO-A1-2009/125444
- DE-A1- 4 024 515
- AZONANO TECHNOLOGY: "Fuel Cell, Energy Storage and Solar Energy Applications for Nanomaterials and Nanoparticles" INTERNET ARTICLE, [Online] 2 August 2005 (2005-08-02), pages 1-7, XP002551718 Retrieved from the Internet: URL:HTTP://WWW.AZONANO.COM/DETAILS.ASP?ART ICLEID=1339> [retrieved on 2009-10-20]
- JASON STAIRS: "CLUSTER" NANOWORD NET, [Online] 25 February 2007 (2007-02-25), XP002551719 Retrieved from the Internet: URL:http://web.archive.org/web/20070225054 718/http://www.nanoword.net/library/defgen /generate.php?termid=146> [retrieved on 2009-10-20]
- PHILLIPS J C: "Heuristic model for hydrogen chemisorption on transition metal clusters" JOURNAL OF CHEMICAL PHYSICS, vol. 84, no. 3, 1 February 1986 (1986-02-01), pages 1951-1952, XP008113612 AMERICAN INSTITUTE OF PHYSICS, NEW YORK, NY, US ISSN: 0021-9606

## Description

### Field of the invention

The present invention relates to a process for producing energy by nuclear reactions between a metal and hydrogen that is adsorbed on the crystalline structure of the metal. Furthermore, the invention relates to an energy generator that carries out such reactions.

### Description of the prior art

A method for producing heat by nuclear reactions caused by hydrogen that is adsorbed on a Nickel active core has been described in WO95/20816, in the name of Piantelli et. al.. Improvements of the process are described in Focardi, Gabbani, Montalbano, Piantelli, Veronesi, "Large excess heat production in Ni-H systems", in II Nuovo Cimento, vol. IIIA, N.11, november 1998, and bibliography therein.

A problem that was observed during the experiments was the preparation of the cores on which hydrogen had to be adsorbed and the reactions had to be carried out; such cores were made of Nickel and had the shape of small bars.

One of the various critical aspects of the process was the choice of a suitable method for adsorbing hydrogen and the quality of the hydrogen matter, as well as the repeatability of the triggering conditions of the process.

Other critical aspects were how to clean the small bar before the adsorption of the hydrogen, as well as how to optimize the optimal bar surface conditions and the method for triggering and shutting down the reactions.

Due to such problems, the set up of the process and its industrial exploitation turned out to be somewhat difficult.

A further critical aspect is the core sizing and design to attain a desired power.

In DE4024515 a process is described for obtaining energy from the nuclear fusion of hydrogen isotopes, in which the atoms are brought into contact with clusters that contains from three to one hundred thousand atoms of a transition metal, and in which the clusters are obtained by cooling finely subdivided metal particles.

### Summary of the invention

It is therefore a feature of the present invention to provide a method for producing energy by nuclear reactions of hydrogen that is adsorbed in a crystalline structure of a metal, which ensures repeatability of the triggering conditions of the reactions.

It is, furthermore, a feature of the present invention to provide such a method for industrially making the precursors of the active cores, and for industrially adsorbing hydrogen in them.

It is another feature of the present invention to provide an energy generator that effects the above described nuclear reactions, whose production rate and size are also such that an industrial production is allowed.

It is similarly a feature of the present invention to provide such a generator, which allows easily adjusting the output power.

It is a further feature of the present invention to provide such a generator, which can be easily shut down.

These and other features are accomplished by a method for producing energy by nuclear reactions between hydrogen and a metal, said method providing the steps of:
- prearranging a determined quantity of crystals of a transition metal, said crystals arranged as micro/nanometric clusters that have a predetermined crystalline structure, each of said clusters having a number of atoms of said transition metal which is less than a predetermined number of atoms;
- bringing hydrogen into contact with said clusters;
- heating said determined quantity of clusters up to an adsorption temperature larger than a predetermined critical temperature, that is adapted to cause an adsorption into said clusters of said hydrogen as H- ions, said hydrogen as H- ions remaining available for said nuclear reactions within said active core after said heating step;
- triggering said nuclear reactions between said hydrogen as H- ions and said metal within said clusters by an impulsive action exerted on said active core that causes said H- ions to be captured into respective atoms of said clusters, said succession of reactions causing a production of heat;
- removing said heat from said active core maintaining the temperature of said active core above said critical temperature, said step of removing said heat carried out according to a predetermined power.

Advantageously, said step of prearranging is carried out in such a way that said determined quantity of crystals of said transition metal in the form of micro/nanometric clusters is proportional to said power.

The number of clusters is the variable through which the predetermined power can be obtained from an active core that comprises a predetermined amount of metal. The micro/nanometric clusters structure is a requirement for producing H⁻ ions and for the above cited orbital and nuclear capture processes. For each transition metal, a critical number of atoms can be identified below which a level discrete structure (electronic density, functional of the electronic density and Kohn-Sham effective potential) and Pauli antisymmetry, tend to prevail over a band structure according to Thomas-Fermi approach. The discrete levels structure is at the origin of the main properties of the clusters, some of which have been cited above. Such features can be advantageously used for analysing the nature of the surface, i.e. for establishing whether clusters are present or not.

In fact, each cluster is a site where a reaction takes place, therefore the power that can be obtained is substantially independent from the clusters size, i.e. from the number of atoms that form the cluster.

In particular, the number of atoms of the clusters is selected from a group of numbers that are known for giving rise to structures that are more stable than other aggregates that comprise a different number of atoms. Such stability is a condition to attain a high reactivity of the clusters with respect to hydrogen to give H- ions. For instance, a stability function has been identified for Nickel, which depends upon the number of atoms that form the clusters, obtaining specific stability peaks that correspond to that particular numbers.

The hydrogen that is used in the method can be natural hydrogen, i.e., in particular, hydrogen that contains deuterium with an isotopic abundance substantially equal to 0,015%. Alternatively, such hydrogen can be hydrogen with a deuterium content which is distinct from that above indicated, and/or hydrogen with a significant tritium content.

Preferably, the hydrogen in use is molecular hydrogen H₂; alternatively, the hydrogen is preliminarily ionized as H⁻, or it can be a mixture that contains H⁻ and H₂.

The transition metal can be selected from the group comprised of: Sc, Ti, V, Cr, Mn, Fe, Co, Ni, Zn, Y, Zr, Nb, Pd, Mo, Tc, Ru, Rh, Ag, Cd, Lu, Hf, Ta, W, Re, Os, Ir, Pt, Au, lanthanoids, actinoids. Such metals belong to one of the four transition groups , i.e.:
- metals that have a partially filled 3d-shell, e.g. Nickel;
- metals that have a partially filled 4d-shell, e.g. Rhodium;
- metals that have a partially filled 5d-shell, i.e. the "rare earths" or lanthanoids, e.g. Cerium;
- metals that have a partially filled 5d-shell, i.e. the actinonoids, e.g. Thorium.

The metal in use can also be an alloy of two or more than two of the above listed metals.

Among the listed transition metals, or their alloys, the ones are preferred those that crystallize with a crystalline structure selected from the group comprised of:
- face-centred cubic crystalline structure;
- body-centred cubic crystalline structure;
- compact hexagonal structure.

Advantageously, metals are used that have a crystalline open face structure, in order to assist the H- ions adsorption into the clusters.

Preferably, said transition metal is Nickel. In particular, said Nickel is selected from the group comprised of:
- natural Nickel, i.e. a mixture of isotopes like Nickel 58, Nickel 60, Nickel 61, Nickel 62, Nickel 64;
- a Nickel that contains only one isotope, said isotope selected from the group comprised of:
- Nickel 58;
- Nickel 60
- Nickel61;
- Nickel 62;
- Nickel 64;
- a formulation comprising at least two of such isotopes at a desired proportion.

The H- ions can be obtained by treating, under particular operative conditions, hydrogen H₂ molecules that have been previously adsorbed on said transition metal surface, where the semi-free valence electrons form a plasma. In particular, a heating is needed to cause lattice vibrations, i.e. phonons, whose energy is higher than a first activation energy threshold, through nonlinear and anharmonic phenomena. In such conditions, the following events can occur:
- a dissociation of the hydrogen molecules that is adsorbed on the surface;
- an interaction with valence electrons of the metal, and formation of H-ions;
- an adsorption of the H- ions into the clusters, in particular the clusters that form the two or three crystal layers that are most close to the surface. The H-ions can just physically interact with the metal, or can chemically bond with it, in which case hydrides can be formed.

The H- ions can also be adsorbed into the lattice interstices, but
- adsorption at the grain edges, by trapping the ions into the lattice defects;
- replacement of an atom of the metal of a clusters may also occur.

After such adsorption step, the H- ions interact with the atoms of the clusters, provided that a second activation threshold is exceeded, which is higher than the first threshold. By exceeding this second threshold, in accordance with the Pauli exclusion principle and with the Heisenberg uncertainty principle, the conditions are created for replacing electrons of metal atoms with H- ions, and, accordingly, for forming metal-hydrogen complex atoms. This event can take place due to the fermion nature of H- ion; however, since H- ions have a mass 1838 times larger than an electron mass, they tend towards deeper layers, and cause an emission of Auger electrons and of X rays. Subsequently, since the H- ion Bohr radius is comparable with the metal core radius, the H- ions can be captured by the metal core, causing a structural reorganization and freeing energy by mass defect; the H- ions can now be expelled as protons, and can generate nuclear reactions with the neighbouring cores.

More in detail, the complex atom that has formed by the metal atom capturing the H- ion, in the full respect of the energy conservation principle, of the Pauli exclusion principle, and of the Heisenberg uncertainty principle, is forced towards an excited status, therefore it reorganizes itself by the migration of the H- ion towards deeper orbitals or levels, i.e. towards a minimum energy state, thus emitting Auger electrons and X rays during the level changes. The H- ion falls into a potential hole and concentrates the energy which was previously distributed upon a volume whose radius is about 10⁻¹² m into a smaller volume whose radius is about 5x10⁻¹⁵ m. At the end of the process, the H- ion is at a distance from the core that is comparable with the nuclear radius; in fact in the fundamental status of the complex atom that is formed by adding the H- ion, due to its mass that is far greater the mass of the electron, the H- ion is forced to stay at such deep level at a distance from the core that is comparable with the nuclear radius, in accordance with Bohr radius calculation. As above stated, owing to the short distance from the core, a process is triggered in which the H- ion is captured by the core, with a structural reorganization and energy release by mass defect, similarly to what happens in the case of electron capture with structural reorganization and energy release by mass defect or in case of loss of two electrons, due to their intrinsic instability, during the fall process towards the lowest layers, and eventually an expulsion of the the H- ion takes place as a proton, as experimentally detected in the cloud chamber, and nuclear reactions can occur with other neighbouring cores, said reactions detected as transmutations on the active core after the production of energy.

According to the above, the actual process cannot be considered as a fusion process of hydrogen atoms, in particular of particular hydrogen isotopes atoms; instead, the process has to be understood as an interaction of a transition metal and hydrogen in general, in its particular form of H- ion.

Advantageously, said predetermined number of said transition metal atoms of said clusters is such that a portion of material of said transition metal in the form of clusters or without clusters shows a transition of a physical property of said metal, said property selected from the group comprised of:
- thermal conductivity;
- electric conductivity;
- refraction index.

In particular said step of preparing a determined quantity of micro/nanometric clusters comprises a step of depositing a predetermined amount of said transition metal in the form of micro/nanometric clusters on a surface of a substrate, i.e. a solid body that has a predetermined volume and a predetermined shape, wherein said substrate surface contains at least 10⁹ clusters per square centimetre.

The step of prearranging a determined quantity of clusters can also provide a step of sintering said determined quantity of micro/nanometric clusters, said sintering preserving the crystalline structure and preserving substantially the size of said clusters.

The step of preparing the determined quantity of clusters can provide collecting a powder of clusters into a container, i.e. collecting a determined quantity of clusters or aggregation of loose clusters.

Preferably, said substrate contains in its surface at least 10¹⁰ clusters per square centimetre, in particular at least 10¹¹ clusters per square centimetre, more in particular at least 10¹² clusters per square centimetre.

Preferably, said clusters form on said substrate a thin layer of said metal, whose thickness is lower than 1 micron; in particular such thickness is of the same magnitude of the lattice of the crystalline structure of the transition metal. In fact, the core activation by adsorption of the H- ions into the clusters concerns only a few surface crystal layers.

In particular said step of depositing said transition metal is effected by a process of physical deposition of vapours of said metal.

Said process of depositing can be a process of sputtering, in which the substrate receives under vacuum a determined amount of the metal in the form of atoms that are emitted by a body that is bombarded by a beam of particles.

Alternatively, the process of depositing can comprise an evaporation step or a thermal sublimation step and a subsequent condensation step in which the metal condensates onto said substrate.

Alternatively, the process of depositing can be performed by means of an epitaxial deposition, in which the deposit attains a crystalline structure that is similar to the structure of the substrate, thus allowing the control of such parameters.

The transition metal can be deposited also by a process of spraying.

Alternatively, the step of depositing the transition metal can provide a step of heating the metal up to a temperature that is close to the melting point of the metal, followed by a step of slow cooling. Preferably, the slow cooling proceeds up to an average core temperature of about 600°C.

The step of depositing the metal is followed by a step of quickly cooling the substrate and the transition metal as deposited, in order to cause a "freezing" of the metal in the form of clusters that have a predetermined crystalline structure.

In particular said quickly cooling occurs by causing a current of hydrogen to flow in a vicinity of said transition metal as deposited on said substrate, said current having a predetermined temperature that is lower than the temperature of said substrate.

Advantageously, said step of bringing hydrogen into contact with said clusters is preceded by a step of cleaning said substrate. In particular, said step of cleaning is made by applying a vacuum of at least 10⁻⁹ bar at a temperature set between 350°C and 500°C for a predetermined time.

Advantageously, said vacuum is applied according to a predetermined number, preferably not less than 10, of vacuum cycles and subsequent restoration of a substantially atmospheric pressure of hydrogen. This way, it is possible to quantitatively remove the gas adsorbed within the metal, in particular the gas which is adsorbed in the metal of the active core. In fact, such gas drastically reduces the interaction between the plasma of valence electrons and the hydrogen ions, and can limit or avoid the adsorption of the hydrogen in the clusters, even if an initial adsorption has occurred on the metal surface. If the substrate and the deposited metal are exposed to a temperature that is significantly above 500°C, the cluster structure can be irremediably damaged.

Advantageously, during said step of bringing hydrogen into contact with said clusters, said hydrogen has a partial pressure set between 0,001 millibar and 10 bar, in particular set between 1 millibar and 2 bar, in order to ensure an optimal number of hits between the surface of said clusters and the hydrogen molecules: in fact, an excessive pressure increases the frequency of the hits, such that it can cause surface desorption, as well as other parasitic phenomena.

Advantageously, during said step of bringing hydrogen into contact with said clusters, the hydrogen flows with a speed less than 3 m/s. Said hydrogen flows preferably according to a direction that is substantially parallel to the surface of said clusters. In such condition, the hits between the hydrogen molecules and the metal substrate occur according to small impact angles, which assist the adsorption on the surface of the clusters and prevents re-emission phenomena in the subsequent steps of H- ions formation.

Advantageously, said step of creating an active core by hydrogen adsorption into said clusters is carried out at a temperature that is close to a temperature at which a sliding of the reticular planes of the transition metal, said temperature at which a sliding occurs is set between the respective temperatures that correspond to the absorption peaks α and β.

Advantageously, the concentration of H- ions with respect to the transition metal atoms of said clusters is larger than 0,01, to improve the efficiency of the energy production process. In particular, this concentration is larger than 0,08.

Advantageously, after said step of creating an active core by adsorbing hydrogen into said clusters a step is provided of cooling said active core down to the room temperature, and said step of triggering a succession of nuclear reactions provides a quick rise of the temperature of said active core from said room temperature to said temperature which is higher than said predetermined critical temperature. In particular, said quick temperature rise takes place in a time that is shorter than five minutes.

The critical temperature is normally set between 100 and 450°C, more often between 200 and 450°C. More in detail, the critical temperature is larger than the Debye temperature of said metal.

In particular, said step of triggering said nuclear reactions provides an impulsive triggering action selected from the group comprised of:
- a thermal shock, in particular caused by a flow of a gas, in particular of hydrogen, which has a predetermined temperature that is lower than the active core temperature;
- a mechanical impulse, in particular a mechanical impulse whose duration is less than 1/10 of second;
- an ultrasonic impulse, in particular an ultrasonic impulse whose frequency is set between 20 and 40 kHz;
- a laser ray that is impulsively cast onto said active core;
- an impulsive application of a package of electromagnetic fields, in particular said fields selected from the group comprised of: a radiofrequency pulse whose frequency is larger than 1 kHz; X rays; y rays;
- an electrostriction impulse that is generated by an impulsive electric current that flows through an electrostrictive portion of said active core;
- an impulsive application of a beam of elementary particles; in particular, such elementary particles selected from the group comprised of electrons, protons and neutrons;
- an impulsive application of a beam of ions of elements, in particular of ions of one or more transition metals, said elements selected from a group that excludes O; Ar; Ne; Kr; Rn; N; Xe.
- an electric voltage impulse that is applied between two points of a piezoelectric portion of said active core;
- an impulsive magnetostriction that is generated by a magnetic field pulse along said active core which has a magnetostrictive portion.

Such impulsive triggering action generates lattice vibrations, i.e. phonons, whose amplitude is such that the H- ions can exceed the second activation threshold thus creating the conditions that are required for replacing electrons of atoms of the metal, to form temporary metal-hydrogen complex ions.

Preferably, said step of triggering said nuclear reactions is associated with a step of creating a gradient, i.e. a temperature difference, between two points of said active core. This gradient is preferably set between 100°C and 300°C. This enhances the conditions for anharmonic lattice motions, which is at the basis of the mechanism by which H- ions are produced.

Advantageously, a step is provided of modulating said energy that is delivered by said nuclear reactions.

In particular, said step of modulating comprises removing and/or adding active cores or active core portions from/to a generation chamber which contains one or more active cores during said step of removing said heat.

Said step of modulating comprises a step of approaching/spacing apart sheets of said transition metal which form said active core in the presence of an hydrogen flow.

The step of modulating can furthermore be actuated by absorption protons and alpha particles in lamina-shaped absorbers that are arranged between sheets of said transition metal which form said active core. The density of such emissions is an essential feature for adjusting said power.

Advantageously, a step is provided of shutting down said nuclear reactions in the active core, that comprises an action selected from the group comprised of:
- a further mechanical impulse;
- cooling said active core below a predetermined temperature, in particular below said predetermined critical temperature;
- a gas flow, in particular an Argon flow, on said active core.

In particular, said step of shutting down said nuclear reactions can comprise lowering the heat exchange fluid inlet temperature below said critical temperature.

Advantageously, said succession of reactions with production of heat is carried out in the presence of a predetermined sector selected from the group comprised of:
- a magnetic induction field whose intensity is set between 1 Gauss and 70000 Gauss;
- an electric field whose intensity is set between 1 V/m and 300000 V/m.

The objects of the invention are also achieved by an energy generator that is obtained from a succession of nuclear reactions between hydrogen and a metal, wherein said metal is a transition metal, said generator comprising:
- an active core that comprises a predetermined amount of said transition metal;
- a generation chamber that in use contains said active core;
- a means for heating said active core within said generation chamber up to a temperature that is higher than a predetermined critical temperature;
- a means for triggering said nuclear reaction between said transition metal and said hydrogen;
- a means for removing from said generation chamber the heat that is developed during said reaction in said active core according to a determined power;
   the main feature of said generator is that:
- said active core comprises a determined quantity of crystals of said transition metal, said crystals being micro/nanometric clusters that have a predetermined crystalline structure according to said transition metal, each of said clusters having a number of atoms of said transition metal that is less than a predetermined number of atoms.

Advantageously, said determined quantity of crystals of said transition metal in the form of micro/nanometric clusters is proportional to said power.

Advantageously, said clusters contain hydrogen that is adsorbed as H-ions.

Preferably, said means for heating said active core comprises an electric resistance in which, in use an electric current flows.

In particular, said active core comprises a substrate, i.e. a solid body that has a predetermined volume and a predetermined shape, on whose surface said determined quantity of micro/nanometric clusters of said transition metal is deposited, for at least 10⁹ clusters per square centimetre, preferably at least 10¹⁰ clusters per square centimetre, in particular at least 10¹¹ clusters per square centimetre, more in particular at least 10¹² clusters per square centimetre.

Advantageously, said active core has an extended surface, i.e. a surface whose area is larger than the area of a convex envelope of said active core, in particular an area A and a volume V occupied by said active core with respect to a condition selected from the group comprised of:
- A/V > 12/L, in particular A/V > 100/L;
- A/V > 500 m²/m³,
   where L is a size of encumbrance of said active core, said extended surface in particular obtained using as substrate a body that is permeable to said hydrogen, said body preferably selected from the group comprised of:
- a package of sheets of said transition metal, each sheet having at least one face available for adsorbing said hydrogen, in particular a face that comprises an extended surface;
- an aggregate obtained by sintering particles of whichever shape, in particular balls, cylinders, prisms, bars, laminas, normally said particles having nano- or micrometric granulometry, said particles defining porosities of said active core;
- an aggregate obtained by sintering micro/nanometric clusters of said transition metal;
- a powder of clusters collected within a container, said convex envelope limited by a container of said powder, for example a container made of ceramic.

Preferably, said transition metal is selected from the group comprised of: Sc, Ti, V, Cr, Mn, Fe, Co, Ni, Zn, Y, Zr, Nb, Pd, Mo, Tc, Ru, Rh, Ag, Cd, Lu, Hf, Ta, W, Re, Os, Ir, Pt, Au, lanthanoids, actinoids, an alloy of two or more than two of the above listed metals; in particular said Nickel is selected from the group comprised of:
- natural Nickel, i.e. a mixture of isotopes like Nickel 58, Nickel 60, Nickel 61, Nickel 62, Nickel 64;
- a Nickel that contains only one isotope, said isotope selected from the group comprised of:
- Nickel 58;
- Nickel 60
- Nickel 61;
- Nickel 62;
- Nickel 64;
- a formulation comprising at least two of such isotopes at a desired proportion.

Said means for triggering can be:
- a means for creating a thermal shock in said active core, in particular by means of a flow of hydrogen that is kept at a predetermined temperature lower than the temperature of the active core;
- a means for creating a mechanical impulse, in particular an impulse that lasts less than 1/10 of second;
- a means for creating an ultrasonic impulse;
- a means for casting a laser ray impulse onto said active core;
- a means for impulsively applying a package of electromagnetic fields, in particular said fields selected from the group comprised of: a radiofrequency pulse whose frequency is larger than 1 kHz; X rays; y rays;
- a means for creating an impulsive electric current through an electrostrictive portion of said active core,
- a means for applying an electric voltage impulse between two points of a piezoelectric portion of said active core;
- a means for impulsively applying a beam of elementary particles in particular said particles selected among: electrons; protons; neutrons;
- a means for impulsively applying a beam of ions of elements, in particular of ions of one or more transition metals, said elements selected from a group that excludes O; Ar; Ne; Kr; Rn; N; Xe.
- a means for applying a magnetic field impulse along said active core that has a magnetostrictive portion.

Preferably, a means is associated with said means for triggering that is adapted to create a gradient, i.e. a temperature difference between two points of said active core, in particular said temperature difference set between 100°C and 300°C.

Preferably, said active core is arranged in use at a distance less than 2 mm from an inner wall of said generation chamber. This way, the production of H- ions is enhanced, since this distance is comparable with the mean free path of the hydrogen molecules at the working temperature and the working pressure.

Advantageously, said generator comprises a means for modulating said energy that is released by said nuclear reactions.

Said means for modulating can comprise a means for removing/adding active cores or active core portions from/into said generation chamber.

In particular, said active core comprises a set of thin sheets, preferably said thin sheets having a thickness that is less than one micron, that are arranged facing one another and said means for modulating comprises a structure that is adapted to approach and/or to space apart said sheets while a hydrogen flow is modulated that flows in a vicinity of said core.

Still in the case of an active core which comprises sheets that are arranged adjacent to one another, said means for modulating can comprise lamina-shaped absorbers that are arranged between the sheets of said transition metal which form said active core, said absorbers adapted to absorb protons and alpha particles that are emitted by the active core during the reactions.

Advantageously, said generator comprises furthermore a means for shutting down said reaction in the active core.

In particular, said means for shutting down are selected from the group comprised of:
- a means for creating a further mechanical impulse;
- a means for cooling said core below a predetermined temperature value, in particular below said predetermined critical temperature;
- a means for conveying a gas, in particular Argon, on said active core.

In particular, said active core comprises a set of thin sheets, preferably said sheets having a thickness that is less than one micron, said sheets arranged facing one another and said means for modulating provided by said structure and by said absorbers.

Advantageously, said generator comprises a means for creating a predetermined field at said active core, said field selected from the group comprised of:
- a magnetic induction field whose intensity is set between 1 Gauss and 70000 Gauss;
- an electric field whose intensity is set between 1 V/m and 300000 V/m.

Advantageously, said generator comprises a section for producing a determined quantity of clusters on a solid substrate, said section comprising:
- a clusters preparation chamber;
- a means for loading said substrate in said clusters preparation chamber;
- a means for creating and maintaining vacuum conditions about said substrate within said clusters preparation chamber, in particular a means for creating and maintaining a residual pressure equal or less than 10⁻⁹ bar;
- a means for heating and keeping said substrate at a high temperature in said clusters preparation chamber, in particular a means for bringing and keeping said substrate at a temperature set between 350°C and 500°C when the residual pressure is equal or less than 10⁻⁹ bar;
- a means for depositing said transition metal on said substrate, preferably by a technique selected from the group comprised of:
- a sputtering technique;
- a spraying technique;
- a technique comprising evaporation and then condensation of said predetermined amount of said metal on said substrate;
- an epitaxial deposition technique;
- a technique comprising heating the metal up to a temperature that is close to the melting point of the metal, said heating followed by a slow cooling;
- a means for quickly cooling said substrate and said transition metal, such that said transition metal is frozen as clusters that have said crystalline structure.

Advantageously, said section for producing a determined quantity of clusters comprises a means for detecting a transition of a physical property during said step of depositing, in particular of a physical property selected from the group comprised of:
- thermal conductivity;
- electric conductivity;
- refraction index.
said transition occurring when said predetermined number of atoms of said transition metal in a growing cluster is exceeded.

Advantageously, said section for producing a determined quantity of clusters comprises a means for detecting a clusters surface density, i.e. a mean number of clusters in one square centimetre of said surface during said step of depositing.

Preferably, said section for producing a determined quantity of clusters comprises a concentration control means for controlling the H- ions concentration with respect to the transition metal atoms of said clusters.

Preferably, said section for producing a determined quantity of clusters comprises a thickness control means for controlling the thickness of a layer of said clusters, in order to ensure that said thickness is set between 1 nanometre and 1 micron.

Advantageously, said generator comprises a section for producing an active core, said section for producing an active core comprising:
- a hydrogen treatment chamber that is distinct from said generation chamber;
- a means for loading said determined quantity of clusters in said treatment chamber;
- a means for heating said determined quantity of clusters in said hydrogen treatment chamber up to a temperature that is higher than a predetermined critical temperature;
- a means for causing said hydrogen to flow within said hydrogen treatment chamber, said hydrogen having a predetermined partial pressure, in particular a partial pressure set between 0,001 millibar and 10 bar; more in particular between 1 millibar and 2 bar;
- means for transferring said active core from said hydrogen treatment chamber into said generation chamber.

Preferably, said means for causing said hydrogen to flow are such that said hydrogen flows according to a direction that is substantially parallel to an exposed surface of said substrate, In particular, said hydrogen having a speed that is less than 3 m/s.

Advantageously, said section for producing an active core comprises a means for cooling down to room temperature said prepared active core, and said means for heating said active core within said generation chamber are adapted to heat said active core up to said predetermined temperature which is set between 100 and 450°C in a time less than five minutes.

In particular, said quickly cooling in said clusters preparation chamber and/or said cooling down to room temperature in said hydrogen treatment chamber is/are obtained by means of said hydrogen flow on said active core, said flow having a predetermined temperature that is lower than the temperature of said active core.

The objects of the invention are also achieved by an apparatus for producing energy that comprises:
- a means for generating a substance in the vapour or gas state at a first predetermined pressure, said means for generating associated with a heat source;
- a means for expanding said substance from said first pressure to a second predetermined pressure producing useful work;
- a means for cooling said substance down to a predetermined temperature, in particular said predetermined temperature is less than the evaporation temperature of said substance in the vapour state;
- a means for compressing said cooled substance back to said first pressure;
wherein said means are crossed in turn by a substantially fixed amount of said substance, said means for compressing feeding said means for generating; the main feature of this apparatus is that said heat source comprises an energy generator according to the invention as defined means above.

In particular, the above apparatus uses a closed Rankine cycle; advantageously, the thermodynamic fluid is an organic fluid that has a critical temperature and a critical pressure that are at least high as in the case of toluene, or of an ORC fluid, in particular of a fluid that is based on 1,1,1,3,3 pentafluoropropane, also known as HFC 245fa or simply as 245fa.

### Brief description of the drawings

The invention will be made clearer with the following description of an exemplary embodiment thereof, exemplifying but not limitative, with reference to the attached drawings in which:
- figure 1 is a block diagram of an embodiment of the method according to the invention;
- figure 2 is a diagrammatical view of a crystal layer that is formed by clusters deposited on the surface of a substrate;
- figure 3 is a diagrammatical view of the interactions between hydrogen and the clusters in a local enlarged view of Fig. 2;
- figure 4 indicates the transition metals that are most adapted to be used in the method according to the invention;
- figure 5 diagrammatically represents the orbital capture of a negative hydrogen ion by a transition metal atom;
- figures 6, 7, 8 are diagrammatical representations of a face-centred cubic crystalline structure;
- figure 9 diagrammatically represents a body-centred cubic crystalline structure;
- figure 10 diagrammatically represents a crystalline compact hexagonal structure;
- figure 11 is a diagrammatical view of the distribution of hydrogen atoms in such a crystalline structure;
- figure 12 is a block diagram of the parts of the step of prearranging clusters of Fig. 1, to obtain a clusters surface structure;
- figure 13 shows a typical temperature profile of what is shown in Fig. 12;
- figure 14 is a block diagram of the parts of the step of prearranging clusters and of the step of hydrogen treatment of said clusters to obtain an active core;
- figure 15 shows a typical thermal profile of a process that comprises the steps shown in Fig. 14;
- figure 16 shows a reactor that is adapted to produce energy, according to the present invention, by an impulsively triggered nuclear reaction of hydrogen adsorbed on a transition metal;
- figure 17 diagrammatically shows a device for preparing an active core according to the invention;
- figure 18 diagrammatically shows a generator that comprises the reactor of Fig. 16 and the device of Fig. 17;
- figures 19 to 23 show alternate exemplary embodiments of the active core according to the invention;
- figure 24 shows a temperature gradient through an active core.

### Description of preferred exemplary embodiments.

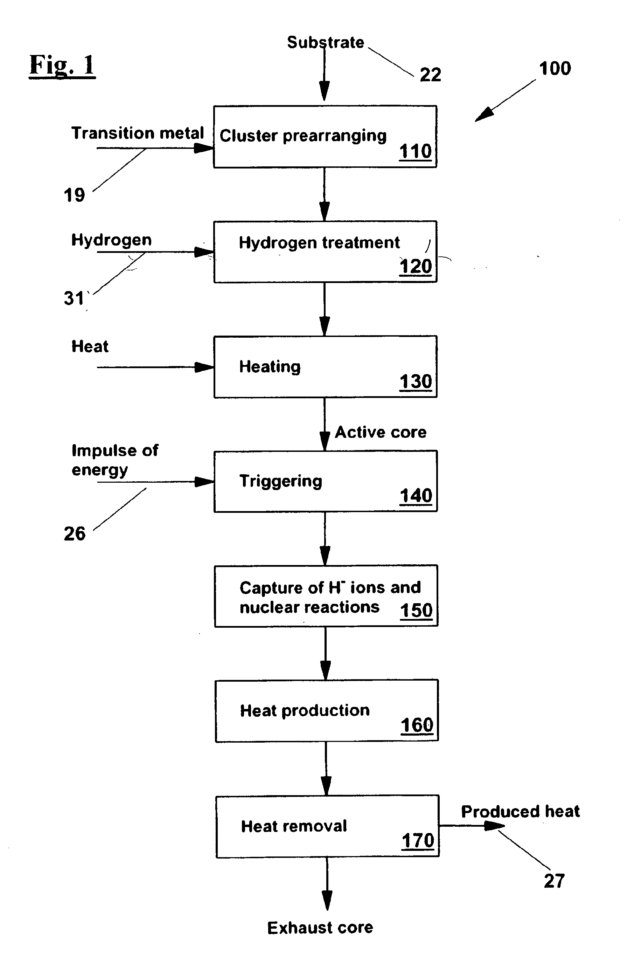

With reference to Figs. 1, 2 and 3, an exemplary embodiment 100 of the method according to the invention is described, for producing energy by a succession of nuclear reactions between hydrogen 31 and a transition metal 19. According to this exemplary embodiment, the method provides a step 110 of prearranging clusters 21, for example a layer of clusters 20 on a substrate 22, this layer 20 defined by a surface 23. A crystal layer 20 of thickness d, preferably set between 1 nanometre and 1 micron is diagrammatically shown. The metal is deposited with a process adapted to ensure that the crystals as deposited have normally a number of atoms of the transition metal less than a predetermined critical number, beyond which the crystal matter looses the character of clusters. In the case of prearranging the clusters on a substrate, the process of depositing is adapted to ensure that 1 square centimetre of surface 23 defines on average at least 10⁹ clusters 21.

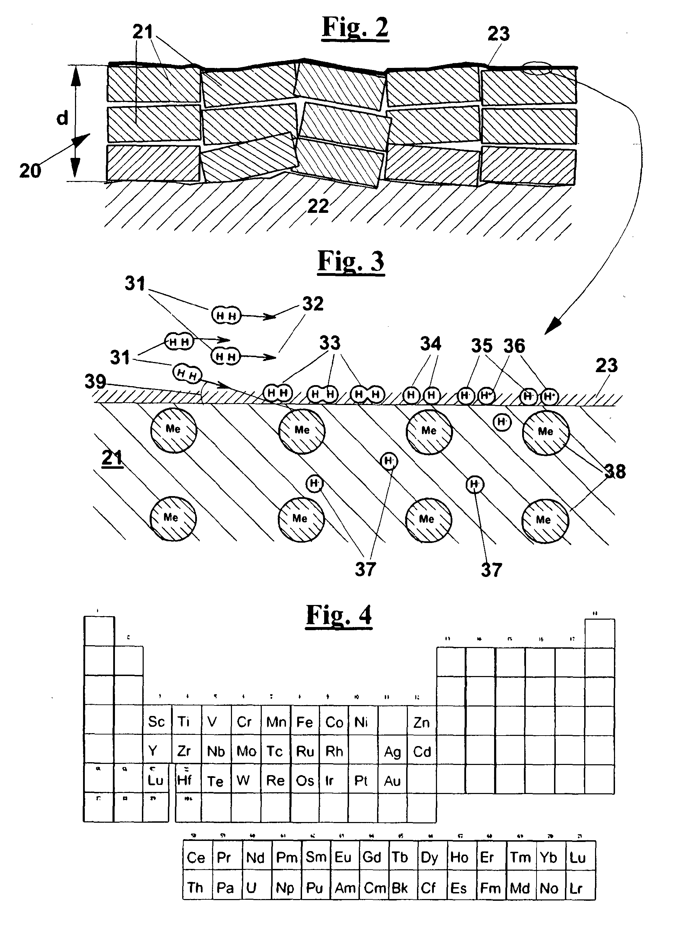

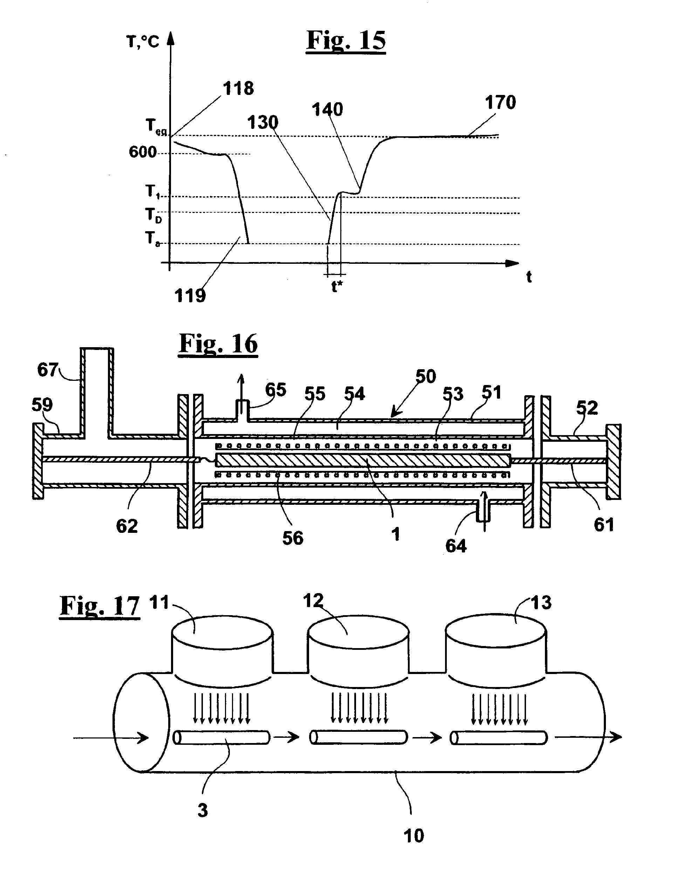

The method provides then a treatment step 120 of the clusters with hydrogen 31, in which hydrogen 31 is brought into contact with surface 23 of the clusters 21, in order to obtain a population of molecules 33 of hydrogen that is adsorbed on surface 23, as shown in Fig. 3. The bonds between the atoms of the hydrogen molecules are weakened, up to having a homolytic or heterolytic scission of the molecules 33, obtaining, respectively, a couple of hydrogen atoms 34 or a couple consisting of a hydrogen negative H⁻ ion 35 and a hydrogen positive H⁺ ion 36, from each diatomic molecule 33 of hydrogen. A contribution to this process of weakening the bond and of making, in particular H- ions 35, is given by a heating step 130 of surface 23 of the clusters up to a temperature T₁ larger than a predetermined critical temperature T_{D}, as shown in Fig. 15; this heating causes furthermore, an adsorption of the hydrogen in the form of H- ions 37 into clusters 21 (Fig. 3).

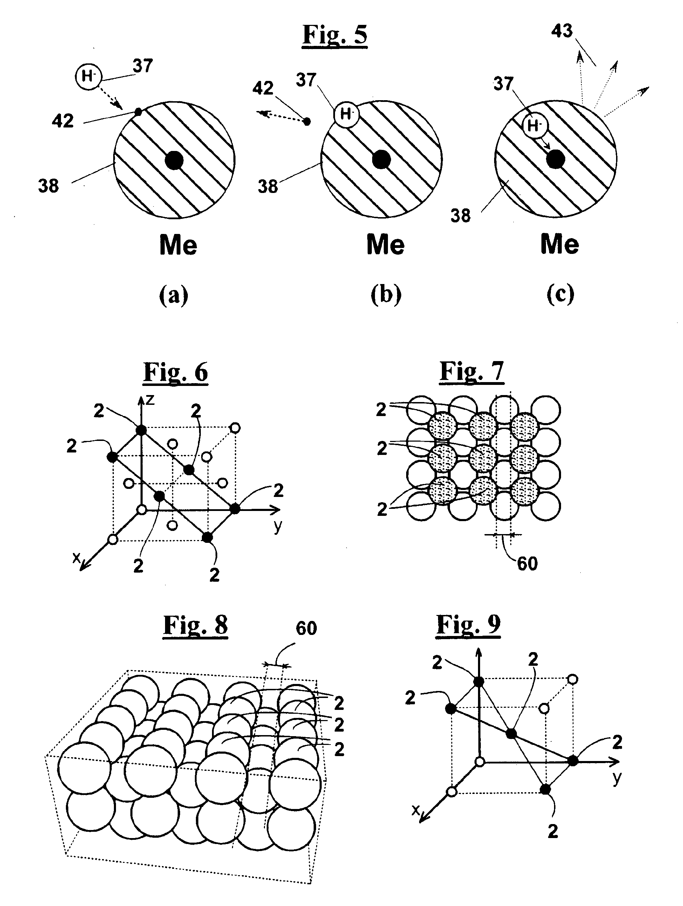

The clusters 21 with the adsorbed hydrogen 37 in this form represent an active core that is available for nuclear reactions, which can be started place by a triggering step 140; such step consists of supplying an impulse of energy 26 that causes the capture 150 by an atom 38 of the clusters of the H- ions 37 adsorbed within the clusters, with a consequent exchange of an electron 42, as diagrammatically shown in Fig. 5, such that the succession of reactions causes a release of energy 43 to which a step 160 of production of heat 27 is associated, which requires a step of removal 170 of this heat towards an use, not shown.

During the step 110 of prearranging clusters 21, the predetermined number of atoms of the transition metal of the clusters is controlled by observing a physical property of the transition metal, chosen for example between thermal conductivity, electric conductivity, refraction index. These physical quantities have a net transition, when the number of atoms of a crystal aggregate exceeds a critical number above which the aggregate looses the properties of a cluster. For each transition metal, in fact is a number of atoms detectable below which a discrete level structure according to Kohn-Sham tends to prevail over a band structure according to Thomas-Fermi, which is responsible of the main features that define the many features of the clusters, some of which properties are used for determining the nature of surface 23 during the step 110 of prearranging the clusters.

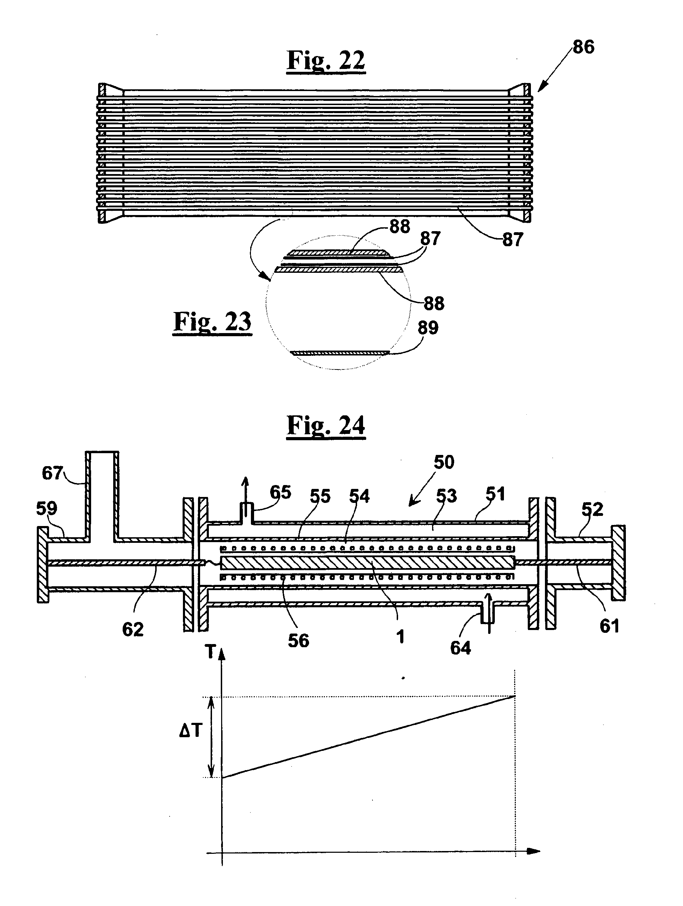

In Fig. 4 in the periodic table of the chemical elements the position is indicated of the transition metals that are adapted for the process. They are in detail, Sc, Ti, V, Cr, Mn, Fe, Co, Ni, Zn, Y, Zr, Nb, Pd, Mo, Tc, Ru, Rh, Ag, Cd, Lu, Hf, Ta, W, Re, Os, Ir, Pt, Au, lanthanoids, actinoids, an alloy of two or more than two of the above listed metals. They belong to one of the four transition metals groups, i.e.:
- metals that have a partially filled 3d-shell, e.g. Nickel;
- metals that have a partially filled 4d-shell, e.g. Rhodium;
- metals that have a partially filled 5d-shell, i.e. the "rare earths" or lanthanoids, e.g. Cerium;
- metals that have a partially filled 5d-shell, i.e. the actinonoids, e.g. Thorium. The particular electronic conformation of the transition metals allows in fact that the conditions of anharmonicity are created such that the wave vectors sum with each other of the phonons, which interfere at the surface of the metal that is also a surface of discontinuity, and a reticular fluctuation is generated that is both in spatial phase and in time phase within the clusters, and such that an energy "gap" is exceeded that is necessary to start a chain of processes whose final act is the orbital capture of the H⁻ ion 37, as diagrammatically shown in Fig. 5. In order to achieve a result that is industrially acceptable, it is necessary to reach a temperature higher than the Debye temperature T_{D}, for example the temperature T₁ as shown in fig. 15, which shows a typical temperature trend from heating step 130 to heat removal step 170, during which a balance value is obtained of the temperature Tₑq at the active core 1. The triggering step is assisted by the presence of a thermal gradient ΔPT along the metal surface of the active core 1, as shown for example in Fig. 24.

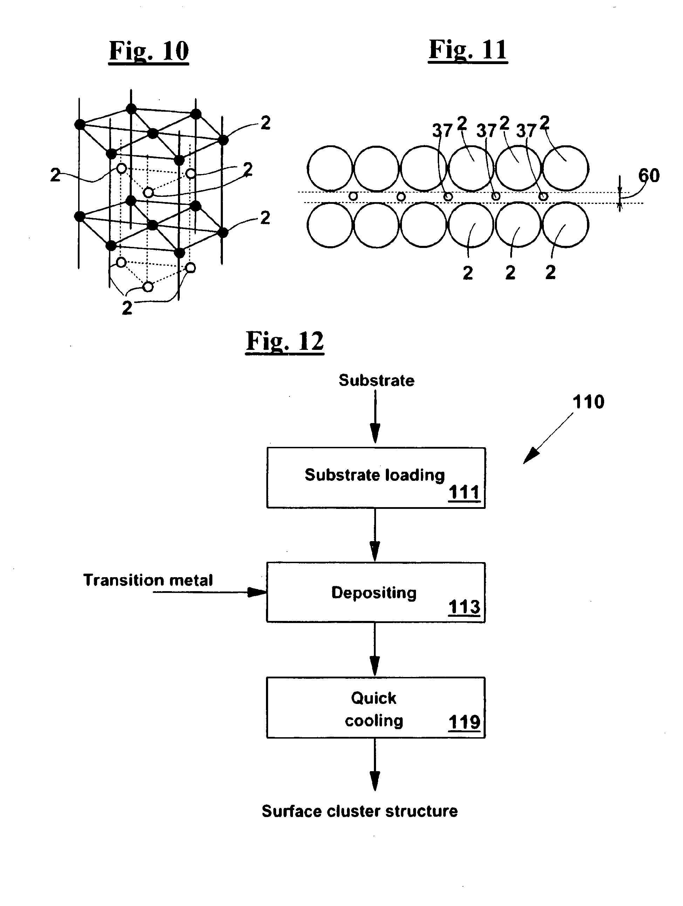

The clusters 21 (Figs. 2 and 3) have a crystalline structure 19 that is typical of the chosen transition metals or alloy of transition metals. In Figs. from 6 to 10 crystal reticules with open faces are shown, which assist the process for adsorption of the hydrogen, in the form of H- ion 37 (Fig. 3), into a cluster 21, characterised by such structural arrangement. They comprise:
- face-centred cubic crystalline structure, fcc [110] (Figs. 6, 7 and 8);
- body-centred cubic crystalline structure, bcc [111] (Fig. 9);
- compact hexagonal structure, hcp [1010] (Fig. 10).

For example, the Nickel can crystallize according to the face-centred cubic structure shown in the perspective view of Fig. 6, where six atoms 2 are shown arranged according to a diagonal plane.

In Fig. 7 a top plan view is shown of a three-dimensional model comprising a plurality of atoms arranged according to the structure of Fig. 6, whereas Fig. 8 is a further perspective view of a model that shows, between the atoms of the upper level, six atoms 2 that are arranged on two different rows separate from a space 60. As shown in Fig. 11, in this space 60 the hydrogen atoms 37 are arranged in the form of adsorbed H- ions in the above described crystalline structure. This occurs also for transition metals that crystallize in a body-centred cubic crystalline structure, as shown in the perspective view of Fig. 9, where the five atoms 2 are shown arranged at the vertices and at the centre of a diagonal plane of a cube, and also for metals that crystallize in the structure of Fig. 10.

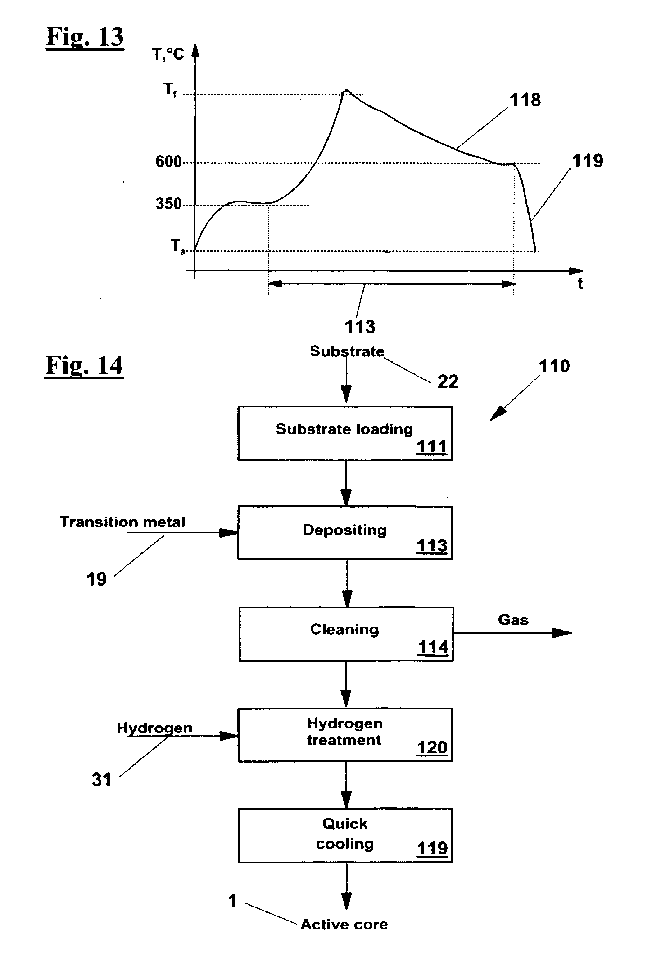

The step of prearranging clusters 110, in case of an active core that is obtained by depositing a predetermined amount of said transition metal in the form of micro/nanometric clusters on a surface of a substrate, is shown with higher detail in the block diagram of Fig. 12 and in the temperature profile of Fig. 13. In particular, after a step 111 of loading a substrate in a preparation chamber, a step 113 is provided of depositing the transition metal on the substrate preferably by means of sputtering, or spraying, or epitaxial deposition; the deposited metal is then heated further up to a temperature close to the melting temperature T_{f} (Fig. 13), in order to bring it to an incipient fusion, and then follows a slow cooling step 118, in particular up to an average core temperature of about 600°C, after which a quick cooling 119 is operated up to room temperature. This has the object of "freezing" the cluster structure that had been obtained at high temperature, which would otherwise evolve towards balance, without stopping at a cluster size, if the slow cooling 118 would be continued.

In Fig. 14 a block diagram is shown an alternative step of prearranging clusters 110, in which the depositing step 113 is followed by a step 114 of cleaning the substrate, which is carried out preferably by means of repeatedly creating and removing a vacuum of at least 10⁻⁹ bar at a temperature of at least 350°C. Such operative conditions, in particular the ultra high vacuum, have the object for quantitatively removing any gas that is adsorbed on or adsorbed in the substrate, which would reduce drastically the interactions between the valence electron plasma of surface 23 and the hydrogen ions H⁻, avoiding the adsorption of the hydrogen 31 in the clusters 21 even if a physical surface adsorption has been achieved. Then a treatment step 120 follows of the clusters 21 with a flow of cold hydrogen, which causes also the quick cooling step 119. As shown in the diagram of Fig. 15, in a period of the cooling step 119 the temperature of the active core is higher than the critical temperature T_{D}, which allows an adsorption of the hydrogen negative ions 37 in the clusters 21 (Fig. 3), such that at the end of step 110, after the quick cooling step 119, an active core is obtained that is adapted to be triggered, without that a specific treatment with hydrogen and a specific heating step 130 are necessary (v. Fig. 1).

In any case, the step 120 of feeding hydrogen is carried out in order to provide a relative pressure between 0,001 millibar and 10 bar, preferably between 1 millibar and 2 bar, to ensure an optimal number of hits of the hydrogen molecules 31 against surface 23, avoiding in particular surface desorption and other undesired phenomena caused by excessive pressure; furthermore, the speed 32 of the hydrogen molecules 31 (Fig. 3) is less than 3 m/s, and has a direction substantially parallel to surface 23, in order to obtain small angles of impact 39 that assist the adsorption and avoid back emission phenomena.

In Fig. 15, furthermore, the temperature is shown beyond which the reticular planes start sliding, which is set between the temperatures corresponding to the absorption peaks α and β, above which the adsorption of the H- ions 37 in the clusters 21 is most likely.

Figure 15 refers also to the case in which, after the step of adsorption of hydrogen, that is effected at a temperature that is higher than critical temperature T_{D}, a cooling step 119 is carried out at room temperature of the active core. The step of triggering 140 follows then a specific heating step 130 starting from the room temperature up to the predetermined temperature T₁ that is larger than the Debye temperature of the metal TD, in a time t* that is as short as possible, preferably less than 5 minutes, in order not to affect the structure of the clusters and/or to cause desorbing phenomena before triggering step 140.

The critical temperature T_{D} is normally set between 100 and 450°C, more preferably between 200 and 450°C; hereafter the Debye temperature is indicated for some of the metals above indicated: Al 426K; Cd 186K; Cr 610K; Cu 344.5K; Au 165K; α-Fe 464K; Pb 96K; α-Mn 476K; Pt 240K; Si 640K; Ag 225K; Ta 240K; Sn 195K; Ti 420K; W 405K; Zn 300K.

Such impulsive triggering action generates lattice vibrations, or phonons, having an amplitude such that the H- ions can pass the second activation threshold and achieve the conditions necessary for replacing electrons of atoms of the metal, creating metal-hydrogen complex ions (Fig. 5).

The orbital capture of the H- ions 37 is assisted by a gradient of temperature between two points of the active core, in particular set between 100°C and 300°C, which has a trend like the example shown in Fig. 24.

In Fig. 16 an energy generator 50 is shown according to the invention, comprising an active core 1 housed in a generation chamber 53. The active core can be heated by an electric winding 56 that can be connected to a source of electromotive force, not shown. A cylindrical wall 55 separates generation chamber 53 from an annular chamber 54, which is defined by a cylindrical external wall 51 and have an inlet 64 and an outlet 65 for a heat exchange fluid, which is used for removing the heat that is developed during the nuclear reactions. The ends of central portion 51 are closed in a releasable way respectively by a portion 52 and a portion 59, which are adapted also for supporting the ends in an operative position.

Generator 50, furthermore, comprises a means 61, 62, 67 for triggering the nuclear reaction, consisting of:
- a means for producing an impulsive electric current through an electrostrictive portion of the active core;
- a means for casting a laser impulse on the active core.

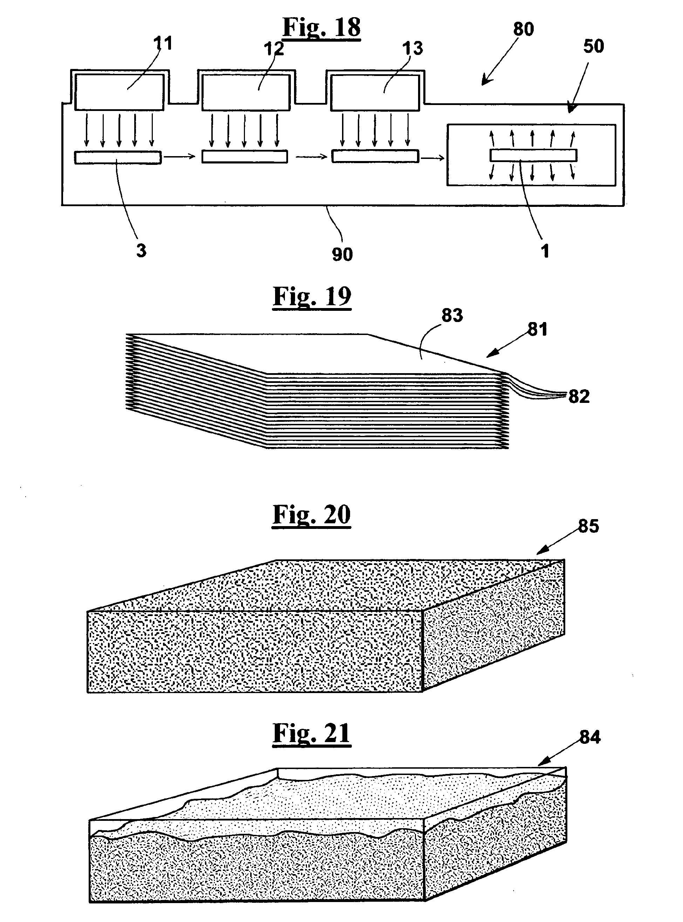

In Figs. from 19 to 23 three different embodiments are shown of an active core having an extended surface, using as substrate a body that is permeable to hydrogen, for example a package 81 of sheets 82 of the transition metal, wherein a surface 83 can be in turn a porous surface; alternatively, the active core can also be a plurality of particles of whichever shape, preferably with nano- or micro- granulometry, in particular micro/nanometric clusters. Such particles can be sintered as shown in Fig. 20 to form a body 85 having a desired geometry, or they can be loose, enclosed in a container 84, preferably of ceramic. Another possibility, shown in Fig. 22, consists of a tube bundle 86 where tubes 87 act as substrate for a layer 88 of transition metal that is deposited in the form of clusters at least on a surface portion of each tube 87.

The device of Fig. 17 has an elongated casing 10, which is associated with a means for making and maintaining vacuum conditions inside, not shown. In particular the residual pressure during the step of cleaning the substrate is kept identical or less than 10⁻⁹ absolute bar, for removing impurities, in particular gas that is not hydrogen. Furthermore, a means is provided, not shown in the figures, for moving substrate 3 within casing 10, in turn on at least three stations 11, 12 and 13. Station 11 is a chamber for preparation of the clusters where the surface of the substrate 3 is coated with a layer of a transition metal in the form of clusters by a process of sputtering. In chamber 11 a means is provided, not depicted, for bringing and maintaining the substrate at a temperature identical or higher than 350°C. In station 12 a cooling step 119 is carried out (Figs. 14 and 15) of the deposited metal on the substrate, by feeding cold hydrogen and at a pressure preferably set between 1 millibar and 2 relative bar, so that they can be adsorbed on the metal. In station 13 instead a controlling step is carried out of the crystalline structure, for example by computing a physical property, such as thermal conductivity, electric conductivity, or refraction index, in order to establish the nature of clusters of the crystals deposited on the substrate 3; preferably, furthermore, a thickness control is carried out of the crystal layer and of the cluster surface density.

Figure 18 represents diagrammatically a device 80 that comprises a single closed casing 90, in which a section for preparing an active core 1 of the type shown in Fig. 17 and a reactor 50 are enclosed, thus preserving the core from contamination, in particular from gas that is distinct from hydrogen during the time between the step of depositing the clusters and the step of triggering the reactions.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A method for producing energy by nuclear reactions between hydrogen and a metal, said method providing the steps of:
- prearranging (110) a predetermined quantity of crystals of a transition metal (19), said crystals arranged as micro/nanometric clusters (21) having a predetermined crystalline structure, each of said clusters having a number of atoms of said transition metal less than a predetermined critical number of atoms;
- bringing (120) hydrogen (31) into contact with said clusters (21);
- heating (130) said clusters (21) up to an adsorption temperature (T₁) larger than a predetermined critical temperature (T_{D}), and causing an adsorption into said clusters (21) of hydrogen as H- ions (37), after said heating step (130) said hydrogen as H- ions (37) remaining available for said nuclear reactions within said active core (1,81,85);
- triggering (140) said nuclear reactions between said hydrogen as H-ions (37) and said metal (19) within said clusters (21) by an impulsive action (26) on said active core (1) that causes said H- ions (37) to be captured (150) into respective atoms (38) of said clusters (21), said succession of reactions causing a production (160) of heat (27);
- removing (170) heat from said active core (1,81,85) in order to obtain a determined power and to maintain the temperature (T_{eq}) of said active core (1) above said critical temperature (T_{D}).

2. A method according to claim 1, wherein said step of prearranging (110) is carried out in such a way that said determined quantity of crystals of said transition metal (19) in the form of micro/nanometric clusters is proportional to said power.

3. A method according to claim 1, wherein said step of prearranging (110) a determined quantity of micro/nanometric clusters (21) comprises a step selected from the group comprised of:
- depositing (113) a predetermined amount of said transition metal (19) in the form of micro/nanometric clusters (21) on a surface (23) of a substrate (3,22), i.e. a solid body that has an a predetermined volume and shape, wherein said substrate (3,22) contains on its surface a number of clusters (21) that is larger than a minimum number, in particular said minimum number at least 10⁹ clusters (21) per square centimetre, preferably, at least 10¹⁰ clusters (21) per square centimetre, more in particular at least 10¹¹ clusters (21) per square centimetre, much more in particular at least 10¹² clusters (21) per square centimetre;
- aggregating said determined quantity of micro/nanometric clusters (21) by sintering, said sintering preserving the crystalline structure of said clusters (21), said sintering preserving substantially the size of said clusters (21);
- collecting into a container (84) a powder that is made of said clusters (21), i.e. a determined quantity of clusters or aggregation of loose clusters.

4. A method according to claim 3, wherein said step (113) of depositing said transition metal (19) is effected by a process of physical deposition on said substrate (22) of a metal vapour that is made of said metal (19).

5. A method according to claim 3, wherein said step of depositing said transition metal (19) is effected by a process selected from the group comprised of:
- sputtering;
- a process comprising evaporation or sublimation and then condensation on said substrate (3,22) of said predetermined amount of said metal (19);
- epitaxial deposition;
- spraying;
- heating up to approaching the melting point (Tf) followed by slow cooling (118), in particular up to an average core temperature of about 600°C,

6. A method according to claim 3, wherein after said step (113) of depositing a predetermined amount of said transition metal a step is provided of quickly cooling (119) said substrate (22) and said deposited metal (19), in order to cause a "freezing" of said transition metal (19) according to clusters (21) having said crystalline structure, said step of quickly cooling (119) selected from the group comprised of: tempering; causing a current of hydrogen to flow near said transition metal (19) as deposited on said substrate (22), said hydrogen having a predetermined temperature that is lower than the temperature of said substrate (22).

7. A method according to claim 1, wherein said step (120) of bringing hydrogen (31) into contact with said clusters (21) is preceded by a step of cleaning (114) said substrate (22), in particular by applying a vacuum of at least 10 bar at a temperature set between 350°C and 500°C for a predetermined time, in particular said vacuum applied according to at least 10 vacuum application cycles and following reinstatement of substantially atmospheric pressure of hydrogen.

8. A method according to claim 1, wherein during said step (120) of bringing hydrogen (31) into contact with said clusters (21) said hydrogen (31) satisfies at least one of the following conditions:
- it has a partial pressure set between 0,001 millibar and 10 bar, in particular between 1 millibar and 2 bar;
- it flows with a speed (32) less than 3 m/s, in particular according to a direction substantially parallel to said surface (23) of said clusters (21).

9. A method according to claim 1, wherein said adsorption temperature is close to a temperature of sliding the reticular planes of the transition metal (19), in particular a temperature set between the temperature corresponding to absorption peaks α and β.

10. A method according to claim 1, wherein after said heating step (130) of said determined quantity of clusters (21) a step is provided of cooling said active core (1) down to room temperature (Tₐ), and said step of triggering (140) said nuclear reactions provides a quick rise of said temperature of said active core (1) from said room temperature to said adsorption temperature, in particular said quick rise is carried out in a time (t*) that is shorter than five minutes.

11. A method according to claim 1, wherein said step of triggering (140) said nuclear reactions is associated with a step of creating a gradient (ΔT), i.e. a temperature difference, between two points of said active core (1), said gradient (ΔT) in particular set between 100°C and 300°C, in order to enhance the anharmonicity of the reticular oscillations and to assist the production of the H- ions (35).

12. A method according to claim 1, wherein said clusters (21) have a face-centred cubic crystalline structure, fcc [110].

13. A method according to claim 1, wherein said reactions with production (160) of heat (27) occur in the presence of a magnetic and/or electric field selected from the group comprised of:
- a magnetic induction field of intensity set between 1 Gauss and 70000 Gauss;
- an electric field of intensity set between 1 V/m and 300000 V/m.

14. An energy generator (50) for obtaining energy from a succession of nuclear reactions between hydrogen (31) and a metal, wherein said metal is a transition metal (19), said generator comprising:
- an active core (1) that comprises a predetermined amount of said transition metal (19);
- a generation chamber (53) that in use contains said active core (1);
- a means for causing said hydrogen (31) to flow within the treatment chamber (53);
- a means (56) for heating said active core (1) within said generation chamber (53) up to a temperature (T₁) that is higher than a predetermined critical temperature (T_{D});
- a means (61,62,67) for triggering said nuclear reactions between said transition metal (19) and said hydrogen (31) by an impulsive action (26) on said active core (1);
- a means (54) for removing from said generation chamber (53) the heat (27) that is developed during said reactions within said active core (1) according to a determined power,
**characterised in that** said active core (1) comprises a determined quantity of crystals of said transition metal (19), said crystals being micro/nanometric clusters (21) that have a determined crystalline structure, said clusters (21) comprising an average number of atoms of said transition metal (19) that is less than a predetermined critical number of atoms, such that when said means for heating said clusters (21) up to an adsorption temperature larger than said critical temperature (T_{D}), an adsorption is caused into said clusters (21) of hydrogen as H- ions (37) which cause said nuclear reactions within said active core (1), and such that said means for triggering can trigger said nuclear reactions between said hydrogen as H- ions (37) and said metal (19) within said clusters (21) by said impulsive action (26) on said active core (1) that causes said H- ions (37) to be captured into respective atoms (38) of said clusters (21) with production of heat (27).

15. An energy generator (50) according to claim 14, wherein said determined quantity of crystals of said transition metal (19) in the form of micro/nanometric clusters (21) is proportional to said power.

## Patentansprüche

1. Verfahren zum Erzeugen von Energie durch Kernreaktionen zwischen Wasserstoff und einem Metall, wobei das Verfahren die Schritte vorsieht von:
- Voranordnen (110) einer vorgegebenen Menge an Kristallen eines Übergangsmetalls (19), wobei die Kristalle als Cluster (21) in Mikro-/Nanometerdimensionen in einer vorgegebenen Kristallstruktur angeordnet sind, jeder der Cluster eine Anzahl Atome des Übergangsmetalls aufweist, die kleiner ist als eine vorgegebene kritische Anzahl von Atomen;
- Inkontaktbringen (120) von Wasserstoff (31) mit den Clustern (21);
- Erhitzen (130) der Cluster (21) bis auf eine Adsorptionstemperatur (T₁), die größer als eine vorgegebene kritische Temperatur (T_{D}) ist, und Herbeiführen einer Adsorption des Wasserstoffs als H- Ionen (37) in die Cluster (21), nach dem Erhitzungsschritt (130) bleibt der Wasserstoff als H- Ionen (37) für die Kernreaktionen innerhalb des aktiven Kerns (1, 81, 85) verfügbar;
- Auslösen (140) der Kernreaktionen zwischen dem Wasserstoff als H- Ionen (37) und dem Metall (19) innerhalb der Cluster (21) durch eine Impulseinwirkung (26) auf den aktiven Kern (1), was dazu führt, dass die H- Ionen (37) von den entsprechenden Atomen (38) der Cluster (21) eingefangen (150) werden, wobei die Aufeinanderfolge der Reaktionen eine Erzeugung (160) von Wärme (27) herbeiführt;
- Entfernen (170) der Hitze aus dem aktiven Kern (1, 81, 85), um eine bestimmte Energie zu erhalten und die Temperatur (T_{eq}) des aktiven Kerns (1) oberhalb der kritischen Temperatur (T_{D}) zu halten.

2. Verfahren nach Anspruch 1, wobei der Schritt des Voranordnens (110) derart ausgeführt wird, dass die ermittelte Menge an Kristallen des Übergangsmetalls (19) in der Form von Clustern in Mikro-/Nanodimensionen proportional zu der Energie ist.

3. Verfahren nach Anspruch 1, wobei der Schritt des Voranordnens (110) einer ermittelten Menge von Clustern (21) in Mikro-/Nanometerdimensionen einen Schritt umfasst, der ausgewählt ist aus der Gruppe, die besteht aus:
- Abscheiden (113) einer vorgegebenen Menge von dem Übergangsmetall (19) in der Form von Clustern (21) in Mikro-/Nanometerdimensionen auf einer Oberfläche (23) von einem Substrat (3, 22), d. h., einem festen Körper, der ein vorgegebenes Volumen und eine vorgegebene Form aufweist, wobei das Substrat (3, 22) auf seiner Oberfläche eine Anzahl Cluster (21) enthält, welche größer ist als eine Mindestanzahl, insbesondere beträgt die Mindestanzahl mindestens 10⁹ Cluster (21) pro Quadratzentimeter, vorzugsweise mindestens 10¹⁰ Cluster (21) pro Quadratzentimeter, noch bevorzugter mindestens 10¹¹ Cluster (21) pro Quadratzentimeter, noch mehr bevorzugt mindestens 10¹² Cluster (21) pro Quadratzentimeter;
- Aggregieren der vorgegebenen Menge der Cluster (21) in Mikro-/Nanometerdimensionen durch Sintern, wobei das Sintern die Kristallstruktur der Cluster (21) bewahrt, wobei das Sintern im Wesentlichen die Größe der Cluster (21) bewahrt;
- Sammeln eines Pulvers, das aus den Clustern (21) hergestellt ist, d. h., eine bestimmte Menge der Cluster oder von Aggregaten aus losen Clustern, in einem Behälter (84).

4. Verfahren nach Anspruch 3, wobei der Schritt (113) des Abscheidens des Übergangsmetalls (19) auf dem Substrat durch ein Verfahren der physikalischen Abscheidung eines Metalldampfs, der aus dem Metall (19) hergestellt ist, (22) bewirkt wird.

5. Verfahren nach Anspruch 3, wobei der Schritt der Abscheidung des Übergangsmetalls (19) bewirkt wird durch ein Verfahren, ausgewählt aus der Gruppe, die besteht aus:
- Sputtern;
- einem Verfahren, das Verdampfung oder Sublimation und anschließend Kondensation der vorgegebenen Menge des Metalls (19) auf dem Substrat (3, 22) umfasst;
- epitaxiale Abscheidung;
- Sprühlackieren;
- Aufheizen bis zum allmählichen Erreichen des Schmelzpunktes (Tf), gefolgt durch langsames Abkühlen (118), insbesondere bis zu einer mittleren Kerntemperatur von ungefähr 600 °C.

6. Verfahren nach Anspruch 3, wobei nach Schritt (113) des Abscheidens einer vorgegebenen Menge des Übergangsmetalls ein Schritt des schnellen Abkühlens (119) von dem Substrat (22) und dem abgeschiedenen Metall bereitgestellt wird, um ein "Erstarren" des Übergangsmetalls (19) gemäß den Clustern (21) mit der Kristallstruktur auszulösen, wobei der Schritt des schnellen Abkühlens (119) ausgewählt ist aus der Gruppe, die besteht aus: Tempern; Heranführen eines Wasserstoffstroms, der in der Nähe von dem Übergangsmetall (19) fließt, das auf dem Substrat (22) abgeschieden ist, wobei der Wasserstoff eine vorgegebene Temperatur aufweist, die niedriger als die Temperatur des Substrates (22) ist.

7. Verfahren nach Anspruch 1, wobei dem Schritt (120) des Inkontaktbringens von Wasserstoff (31) mit den Clustern (21) ein Schritt der Reinigung (114) des Substrats (22) vorangestellt ist, insbesondere durch Anlegen eines Vakuums von mindestens 10⁻⁹ bar bei einer Temperatur, die zwischen 350 °C und 500 °C eingestellt ist, für eine vorgegebene Zeit, insbesondere wird das Vakuum entsprechend mit mindestens 10 Vakuum-Anwendungszyklen und nachfolgender Wiederherstellung des im Wesentlichen atmosphärischen Drucks des Wasserstoffs.

8. Verfahren nach Anspruch 1, wobei während des Schrittes (120) des Inkontaktbringens von Wasserstoff (31) mit den Clustern (21) der Wasserstoff (31) mindestens einem der folgenden Zustände entspricht:
- er weist einen Partialdruck auf, der zwischen 0,001 Millibar und 10 Bar, insbesondere zwischen 1 Millibar und 2 Bar eingestellt ist;
- er fließt mit einer Geschwindigkeit (32) kleiner als 3 m/s, insbesondere entsprechend einer Richtung, die im Wesentlichen parallel zu der Oberfläche (23) der Cluster (21) ist.

9. Verfahren nach Anspruch 1, wobei die Adsorptionstemperatur in der Nähe einer Temperatur für das Gleiten der Gitterebenen des Übergangsmetalls (19) liegt, insbesondere eine Temperatur, die zwischen den Temperaturen eingestellt ist, die den Absorptionsspitzen α und β entsprechen.

10. Verfahren nach Anspruch 1, wobei nach dem Erhistzungsschritt (130) der festgelegten Menge der Cruster (21) ein Schritt zum Abkunfen des aktiven Kerns (1) auf Raumtemperatur (Tₐ) vorgesehen ist und der Schritt des Auslösens (140) der Kernreaktionen einen schnellen Anstieg der Temperatur des aktiven Kerns (1) von der Raumtemperatur auf die Adsorptionstemperatur bereitstellt, insbesondere wird der schnelle Anstieg in einer Zeit (t*) durchgeführt, die kürzer als fünf Minuten ist.

11. Verfahren nach Anspruch 1, wobei der Schritt des Auslösens (140) der Kernreaktionen mit einem Schritt des Erzeugens eines Gradienten (ΔT), d. h. einer Temperaturdifferenz zwischen zwei Punkten des aktiven Kerns (1), verbunden ist, wobei der Gradient (ΔT) insbesondere zwischen 100 °C und 300 °C festgelegt ist, um die Anharmonizität der Gitterschwingungen zu erhöhen und die Erzeugung von H- Ionen (35) zu fördern.

12. Verfahren nach Anspruch 1, wobei die Cluster (21) eine kubisch-flächenzentrierte Kristallstruktur, fcc [110], aufweisen.

13. Verfahren nach Anspruch 1, wobei die Reaktionen mit der Erzeugung (160) von Wärme (27) in Gegenwart eines magnetischen und/oder elektrischen Feldes stattfinden, ausgewählt aus der Gruppe, die besteht aus:
- einem magnetischen Induktionsfeld mit einer Intensität, die zwischen 1 Gauß und 70.000 Gauß eingestellt ist;
- einem elektrischen Feld mit einer Intensität, die zwischen 1 V/m und 300.000 V/m eingestellt ist.

14. Energiegenerator (50) zur Erlangung von Energie aus einer Aufeinanderfolge von Kernreaktionen zwischen Wasserstoff (31) und einem Metall, wobei das Metall ein Übergangsmetall (19) ist, wobei der Generator Folgendes aufweist:
- einen aktiven Kern (1), der eine vorgegebene Menge des Übergangsmetalls (19) umfasst;
- ein Mittel, um zu veranlassen, dass der Wasserstoff (31) innerhalb der Behandlungskammer (53) strömt;
- eine Erzeugungskammer (53), die bei Benutzung den aktiven Kern (1) enthält;
- ein Mittel (56) zum Erhitzen des aktiven Kerns (1) in der Erzeugungskammer (53) bis auf eine Temperatur (T₁), die höher als eine vorgegebene kritische Temperatur (T_{D}) ist;
- ein Mittel (61, 62, 67) zum Auslösen der Kernreaktionen zwischen dem Übergangsmetall (19) und dem Wasserstoff (31) durch eine Impulseinwirkung (26) auf den aktiven Kern (1);
- ein Mittel (54) zum Entfernen der Wärme (27) aus der Erzeugungskammer (53), welche sich während der Reaktionen in dem aktiven Kern (1) entsprechend einer bestimmten Energie entwickelt,
**dadurch gekennzeichnet, dass** der aktive Kern (1) eine festgelegte Menge an Kristallen des Übergangsmetalls (19) enthält, wobei die Kristalle Cluster (21) mit Mikro-/Nanometerdimensionen sind, die eine vorgegebene Kristallstruktur aufweisen, die Cluster (21) eine durchschnittliche Anzahl von Atomen des Übergangsmetalls (19), die kleiner ist als eine vorgegebene kritische Anzahl von Atomen, derart enthalten, dass, wenn die Mittel zum Erhitzen die Cluster (21) bis zu einer Adsorptionstemperatur erhitzen, die größer als die kritische Temperatur (T_{D}) ist, eine Adsorption von Wasserstoff als H- Ionen (37) in den Clustern (21) hervorgerufen wird, wodurch die Kernreaktionen innerhalb des aktiven Kerns (1) verursacht werden, und derart, dass die Mittel zum Auslösen die Kernreaktionen zwischen dem Wasserstoff in Form der H- Ionen (37) und dem Metall (19) innerhalb der Cluster (21) durch Impulseinwirkung (26) auf den aktiven Kern (1) auslösen, was ein Einfangen der H- Ionen (37) durch die entsprechenden Atome (38) der Cluster (21) mit der Erzeugung von Wärme (27) hervorruft.

15. Energiegenerator (50) nach Anspruch 14, wobei die festgelegte Menge an Kristallen des übergangsmetalls (19) in der Form von Clustern (21) mit Mikro-/Nanometerdimensionen proportional zu der Energie ist.

## Revendications

1. Procédé de production d'énergie par des réactions nucléaires entre l'hydrogène et un métal, ledit procédé comprenant les étapes consistant à :
- préagencer (110) une quantité prédéterminée de cristaux d'un métal de transition (19), lesdits cristaux étant agencés comme des amas micro/nanométriques (21) ayant une structure cristalline prédéterminée, chacun desdits amas comportant un nombre d'atomes dudit métal de transition inférieur à un nombre critique prédéterminé d'atomes ;
- mettre en contact (120) de l'hydrogène (31) avec lesdits amas (21) ;
- chauffer (130) lesdits amas (21) jusqu'à une température d'adsorption (T₁) plus haute qu'une température critique prédéterminée (T_{D}), et provoquer une adsorption dans lesdits amas (21) d'hydrogène sous forme d'ions H⁻ (37), ledit hydrogène sous forme d'ions H⁻ (37) restant disponible après ladite étape de chauffage (130) pour lesdites réactions nucléaires avec ledit coeur actif (1, 81, 85) ;
- déclencher (140) lesdites réactions nucléaires entre ledit hydrogène sous forme d'ions H⁻ (37) et ledit métal (19) à l'intérieur desdits amas (21) par une action d'impulsion (26) sur ledit coeur actif (1) qui amène lesdits ions H⁻ (37) à être capturés (150) dans des atomes respectifs (38) desdits amas (21), ladite succession de réactions provoquant une production (160) de chaleur (27) ; et
- évacuer (170) la chaleur dudit coeur actif (1, 81, 85) afin d'obtenir une puissance déterminée et de maintenir la température (T_{eq}) dudit coeur actif (1) au-dessus de ladite température critique (T_{D}).

2. Procédé selon la revendication 1, dans lequel ladite étape de préagencement (110) est réalisée de telle manière que ladite quantité déterminée de cristaux dudit métal de transition (19) sous la forme d'amas micro/manométriques est proportionnelle à ladite puissance.

3. Procédé selon la revendication 1, dans lequel ladite étape de préagencement (110) d'une quantité déterminée d'amas micro/nanométriques (21) comprend une étape choisie dans le groupe constitué par :
- le dépôt (113) d'une quantité prédéterminée dudit métal de transition (19) sous la forme d'amas micro/nanométriques (21) sur une surface (23) d'un substrat (3, 22), c.-à-d. un corps solide qui présente un volume et une forme prédéterminés, ledit substrat (3, 22) contenant sur sa surface un nombre d'amas (21) qui est supérieur à un nombre minimal, ledit nombre minimal étant en particulier d'au moins 10⁹ amas (21) par centimètre carré, de préférence au moins 10¹⁰ amas (21) par centimètre carré, plus particulièrement au moins 10¹¹ amas (21) par centimètre carré, encore plus particulièrement au moins 10¹² amas (21) par centimètre carré ;
- l'agglomération de ladite quantité déterminée d'amas micro/nanométriques (21) par frittage, ledit frittage préservant la structure cristalline desdits amas (21), ledit frittage préservant sensiblement la taille desdits amas (21) ; et
- la collecte dans un récipient (84) d'une poudre qui est constituée desdits amas (21), c.-à-d. d'une quantité déterminée d'amas ou d'une agglomération d'amas libres.

4. Procédé selon la revendication 3, dans lequel ladite étape (113) de dépôt dudit métal de transition (19) est effectuée par un procédé de dépôt physique sur ledit substrat (22) d'une vapeur métallique qui est constituée dudit métal (19).

5. Procédé selon la revendication 3, dans lequel ladite étape de dépôt dudit métal de transition (19) est effectuée par un procédé choisi dans le groupe constitué par :
- la pulvérisation cathodique ;
- un procédé comprenant l'évaporation ou la sublimation puis la condensation sur ledit substrat (3, 22) de ladite quantité prédéterminée dudit métal (19) ;
- le dépôt par épitaxie ;
- la projection ; et
- un chauffage jusqu'à s'approcher du point de fusion (T_{f}) suivi d'un lent refroidissement (118), en particulier jusqu'à une température moyenne du coeur d'environ 600 °C.

6. Procédé selon la revendication 3 dans lequel, après ladite étape (113) de dépôt d'une quantité prédéterminée dudit métal de transition, est prévue une étape de refroidissement rapide (119) dudit substrat (22) et dudit métal déposé (19), afin de provoquer un « figeage » dudit métal de transition (19) sous la forme d'amas (21) ayant ladite structure cristalline, ladite étape de refroidissement rapide (119) étant choisie dans le groupe constitué par : une trempe ; et la mise en circulation d'un courant d'hydrogène à proximité dudit métal de transition (19) tel que déposé sur ledit substrat (22), ledit hydrogène ayant une température prédéterminée qui est plus basse que la température dudit substrat (22).

7. Procédé selon la revendication 1, dans lequel ladite étape (120) de mise en contact d'hydrogène (31) avec lesdits amas (21) est précédée d'une étape de nettoyage (114) dudit substrat (22), en particulier par application d'un vide d'au moins 10⁻⁹ bar à une température fixée entre 350 °C et 500 °C pendant un temps prédéterminé, ledit vide étant en particulier appliqué selon au moins 10 cycles d'application de vide et après rétablissement d'une pression sensiblement atmosphérique d'hydrogène.

8. Procédé selon la revendication 1 dans lequel, durant ladite étape (120) de mise en contact d'hydrogène (31) avec lesdits amas (21), ledit hydrogène (31) satisfait l'une au moins des conditions suivantes :
- il présente une pression partielle réglée entre 0,001 millibar et 10 bars, en particulier entre 1 millibar et 2 bars ;
- il circule à une vitesse (32) inférieure à 3 m/s, en particulier dans une direction sensiblement parallèle à ladite surface (23) desdits amas (21).

9. Procédé selon la revendication 1, dans lequel ladite température d'adsorption est proche d'une température de glissement des plans réticulaires du métal de transition (19), en particulier une température définie entre les températures correspondant aux pics d'absorption α et β.

10. Procédé selon la revendication 1 dans lequel, après ladite étape de chauffage (130) de ladite quantité déterminée d'amas (21), est prévue une étape de refroidissement dudit coeur actif (1) jusqu'à la température ambiante (Tₐ), et ladite étape de déclenchement (140) desdites réactions nucléaires provoque une montée rapide de ladite température dudit coeur actif (1) depuis ladite température ambiante jusqu'à ladite température d'adsorption, ladite montée rapide étant en particulier réalisée en un temps (t*) qui est plus court que 5 minutes.

11. Procédé selon la revendication 1, dans lequel ladite étape de déclenchement (140) desdites réactions nucléaires est associée à une étape de création d'un gradient (ΔT), c.-à-d. d'une différence de température, entre deux points dudit coeur actif (1), ledit gradient (ΔT) étant en particulier établi entre 100 °C et 300 °C, afin d'améliorer l'anharmonicité des oscillations réticulaires et de faciliter la production des ions H⁻ (37).

12. Procédé selon la revendication 1, dans lequel lesdits amas (21) ont une structure cristalline cubique à face centrée, CFC [110].

13. Procédé selon la revendication 1, dans lequel lesdites réactions avec production (160) de chaleur (27) se produisent en présence d'un champ magnétique et/ou électrique choisi dans le groupe constitué par :
- un champ d'induction magnétique d'intensité fixée entre 1 gauss et 70 000 gauss ; et
- un champ électrique d'intensité fixée entre 1 V/m et 300 000 V/m.

14. Générateur d'énergie (50) pour obtenir de l'énergie à partir d'une succession de réactions nucléaires entre l'hydrogène (31) et un métal, ledit métal étant un métal de transition (19), ledit générateur comprenant :
- un coeur actif (1) qui comprend une quantité prédéterminée dudit métal de transition (19) ;
- une chambre de production (53) qui à l'usage contient ledit coeur actif (1) ;
- un moyen pour faire circuler ledit hydrogène (31) à l'intérieur de la chambre de traitement (53) ;
- un moyen (56) pour chauffer ledit coeur actif (1) à l'intérieur de ladite chambre de production (53) jusqu'à une température (T₁) qui est plus haute qu'une température critique prédéterminée (T_{D}) ;
- un moyen (61, 62, 67) pour déclencher lesdites réactions nucléaires entre ledit métal de transition (19) et ledit hydrogène (31) par une action d'impulsion (26) sur ledit coeur actif (1) ; et
- un moyen (54) pour évacuer de ladite chambre de production (53) la chaleur (27) qui est générée pendant lesdites réactions à l'intérieur dudit coeur actif (1) selon une puissance déterminée,
**caractérisé en ce que** ledit coeur actif (1) comprend une quantité déterminée de cristaux dudit métal de transition (19), lesdits cristaux étant des amas micro/nanométriques (21) qui ont une structure cristalline déterminée, lesdits amas (21) comprenant un nombre moyen d'atomes dudit métal de transition (19) qui est inférieur à un nombre critique prédéterminé d'atomes, de telle sorte que, quand ledit moyen de chauffage chauffe lesdits amas (21) jusqu'à une température d'adsorption plus haute que ladite température critique (T_{D}), une adsorption d'hydrogéne sous forme d'ions H⁻ (37) est induite dans lesdits amas (21), laquelle provoque lesdites réactions nucléaires à l'intérieur dudit coeur actif (1), et de telle sorte que ledit moyen de déclenchement peut déclencher lesdites réactions nucléaires entre ledit hydrogène sous forme d'ions H⁻ (37) et ledit métal (19) à l'intérieur desdits amas (21) par ladite action d'impulsion (26) sur ledit coeur actif (1) qui amène lesdits ions H⁻ (37) à être capturés dans des atomes respectifs (38) desdits amas (21) avec production de chaleur (27).

15. Générateur d'énergie (50) selon la revendication 14, dans lequel ladite quantité déterminée de cristaux dudit métal de transition (19) sous la forme d'amas micro/nanométriques (21) est proportionnelle à ladite puissance.
